# EUROPÄISCHE PATENTSCHRIFT

(11) **EP 4 360 184 B1**
(45) Veröffentlichungstag und Bekanntmachung des Hinweises auf die Patenterteilung: **19.03.2025**
(21) Anmeldenummer: 22737784.3
(22) Anmeldetag: 20.06.2022
(51) Int. Cl.: H02J 5/00, H02J 1/00

(54) **VERFAHREN ZUM BETRIEB EINES ENERGIEVERSORGUNGSSYSTEMS, VORRICHTUNG ZUM AUSTAUSCH ELEKTRISCHER LEISTUNG IN EINEM ENERGIEVERSORGUNGSSYSTEM UND ENERGIEVERSORGUNGSSYSTEM**
METHOD FOR OPERATING AN ENERGY SUPPLY SYSTEM, DEVICE FOR EXCHANGING ELECTRICAL POWER IN AN ENERGY SUPPLY SYSTEM, AND ENERGY SUPPLY SYSTEM
PROCÉDÉ DE FONCTIONNEMENT D'UN SYSTÈME D'ALIMENTATION EN ÉNERGIE, DISPOSITIF D'ÉCHANGE D'ÉNERGIE ÉLECTRIQUE DANS UN SYSTÈME D'ALIMENTATION EN ÉNERGIE, ET SYSTÈME D'ALIMENTATION EN ÉNERGIE

(30) Priorität: 24.06.2021 DE 102021116418
(43) Veröffentlichungstag der Anmeldung: 01.05.2024
(73) Patentinhaber: SMA Solar Technology AG, 34266 Niestetal (DE)
(72) Erfinder: KRATOCHVIL, Marcel, 34121 Kassel (DE); UNRU, Alexander, 34225 Baunatal (DE)
(86) Internationale Anmeldenummer: PCT/EP2022/066688
(87) Internationale Veröffentlichungsnummer: WO 2022/268689

(56) Entgegenhaltungen:
- DE-A1- 10 353 967
- DE-A1- 102015 109 967
- DE-A1- 102018 219 711
- US-A1- 2017 353 123
- US-A1- 2018 345 792

## Beschreibung

### Technisches Gebiet

Die Anmeldung betrifft den Austausch von elektrischer Leistung in einem Energieversorgungssystem mit einem DC-Netz, über das die elektrische Leistung mit DC-Verbrauchern ausgetauscht wird und das zumindest teilweise mit elektrischer Leistung aus einer DC-Quelle versorgt wird.

### Stand der Technik

Elektrische Gleichspannungsnetze, im Folgenden DC-Netze genannt, finden zunehmend Anwendung zur Versorgung von Systemen mit einer Vielzahl von Verbrauchern, beispielsweise sogenannte industrielle DC-Netze. DC-Netze können aus einem elektrischen Wechselspannungsnetz, im Folgenden AC-Netz genannt, z.B. aus einem übergeordneten Energieversorgungsnetz gespeist werden. Als DC-Netzteilnehmer können verschiedene DC-Verbraucher und DC-Quellen über geeignete DC-Abzweige mit dem DC-Netz verbunden werden. DC-Verbraucher und DC-Quellen sind Gleichspannungs-Einheiten, die elektrische Gleichspannung verbrauchen (DC-Verbraucher) oder abgeben (DC-Quellen). Beispiele für DC-Quellen sind DC-Energieerzeugungseinheiten, z.B. PV-Anlagen, oder Batterien, die zudem wahlweise als DC-Quellen oder als DC-Verbraucher betrieben werden können. Je nachdem, welcher Netzteilnehmer konkret an einem DC-Abzweig angeschlossen werden soll, kann ein DC-Abzweig über zweipolige schnelle Halbleiterschalter zum Leitungsschutz bei Kurzschluss oder Erdschluss abgesichert sein. Zusätzlich oder alternativ können weiterhin DC-Sicherungen vorgesehen sein.

Bei einem DC-Netz kann es aus Sicherheitsgründen notwendig sein, bestimmte DC-Einheiten, d.h. bestimmte DC-Quellen wie Energieerzeugungseinheiten und/oder bestimmte DC-Verbraucher, galvanisch getrennt an das DC-Netz zu koppeln. Dies bedeutet bei einer Vielzahl von entsprechend einzeln galvanisch zu trennenden DC-Einheiten einen erheblichen Aufwand, beispielsweise indem in jedem entsprechenden DC-Abzweig eine galvanische Trennung vorgesehen sein muss.

Photovoltaik-Anlagen (PV-Anlagen) als Energie erzeugende DC-Quellen oder Speicher, wie z. B. Batterien, als Energie aufnehmende und abgebende DC-Einheiten können grundsätzlich auch über nicht-isolierende DC/DC-Wandler mit dem DC-Netz verbunden werden, wobei ein dazu geeigneter DC/DC-Wandler aus Sicherheitsgründen eine Ableitstromerkennung aufweisen sollte und ggf. den Isolationswiderstand der angeschlossenen PV-Anlage ermitteln muss.

Um von vornherein zu vermeiden, dass der Isolationswiderstand des DC-Netzes insgesamt gegen das Erdpotential durch die PV-Anlage und/oder durch den Speicher bzw. deren Leitungen beeinflusst wird, können die PV-Generatoren oder Speicher auch über isolierende DC/DC-Wandler mit dem DC-Netz verbunden werden, wobei die isolierenden DC/DC-Wandler eine galvanische Trennung zwischen DC-Netz und DC-Einheit mit sich bringen. Dabei benötigt dann jeder angeschlossene PV-Generator eine eigene regelmäßige Isolationsüberwachung.

Zudem kann die galvanische Trennung einer DC-Einheit vom DC-Netz aus weiteren Gründen erforderlich sein, z.B. wenn die maximal mögliche Spannung eines angeschlossenen PV-Generators gegen das Erdpotential die zulässige Leiter-Erde-Spannung des DC-Netzes übersteigt. Auch wenn die PV-Anlage bei galvanischer Kopplung an das DC-Netz eine unzulässige Unsymmetrie des DC-Netzes gegen das Erdpotential erzeugen würde und/oder wenn eine Ableitstromgrenze des DC-Netzes aufgrund einer galvanisch gekoppelten PV-Anlage regelmäßig oder auch sporadisch überschritten würde.

In der Regel ist zudem die Länge der DC-Leitungen und damit der Abstand der DC-Einheiten vom DC-Netz aus technischen Gründen begrenzt. Eine PV-Anlage als DC-Einheit, die als Freifeld- oder Dachanlage ausgeführt ist, kann sich jedoch entsprechend weit entfernt von einem möglichen Anschlusspunkt an das DC-Netz befinden, so dass die PV-Anlage über weite Strecken mit hierfür geeigneten DC-/PV-Kabeln angebunden werden müsste. Ähnliches kann für Speicher gelten, insbesonders wenn diese eine große Kapazität aufweisen und z.B. aus Sicherheitsgründen entfernt vom DC-Netz einer Produktionsstätte oder ähnlichem aufgestellt sein müssen. Eine derartige Anbindung einer DC-Einheit mittels DC-Leitungen kann daher insbesondere bei DC-Einheiten, die große und ausgedehnte PV-Generatoren und/oder leistungsstarke Speicher aufweisen, teuer und ineffizient sein.

Dokument US 2017/353123 A1 offenbart relevanten Stand der Technik.

### Aufgabe

Der Anmeldung liegt die Aufgabe zugrunde, die Versorgung eines DC-Netzes mit elektrischer Leistung aus einer DC-Quelle weiter zu verbessern, und insbesondere PV-Anlagen oder Speicher an ein DC-Netz anzukoppeln, ohne das DC-Netz in seinem Verhalten gegen Erde zu beeinflussen.

### Lösung

Die Aufgabe wird durch ein Verfahren mit den Merkmalen des unabhängigen Patentanspruchs 1 gelöst. Die Aufgabe wird durch eine Vorrichtung mit den Merkmalen des unabhängigen Anspruchs 7 gelöst. Vorteilhafte Ausführungsformen des Verfahrens sind in den abhängigen Ansprüchen beansprucht.

### Beschreibung der Erfindung

Ein Verfahren zum Betrieb eines Energieversorgungssystems mit mindestens einer Energieerzeugungseinheit weist die folgenden Schritte auf:
Austauschen von elektrischer Leistung zwischen einer ersten DC-Einheit und einem AC-Bus über einen ersten Leistungswandler, wobei eine erste DC-Leistung der ersten DC-Einheit über den ersten Leistungswandler in eine erste AC-Leistung gewandelt wird und/oder umgekehrt,
Austauschen von elektrischer Leistung zwischen einer zweiten DC-Einheit und dem AC-Bus über einen zweiten Leistungswandler, wobei eine zweite DC-Leistung der zweiten DC-Einheit über den zweiten Leistungswandler in eine zweite AC-Leistung gewandelt wird und/oder umgekehrt,
Zusammenführen der ersten und der zweiten AC-Leistung zu einer AC-Busleistung des AC-Busses,
Übertragen der AC-Busleistung über einen Transformator,
Austauschen von elektrischer Leistung zwischen dem AC-Bus und einem DC-Netz über einen dritten Leistungswandler, wobei die vom Transformator übertragene AC-Busleistung über den dritten Leistungswandler in eine DC-Netzleistung gewandelt wird und/oder umgekehrt.

Der erste, der zweite und insbesondere der dritte Leistungswandler können als bidirektionale AC/DC-Wandler ausgeführt sein, die elektrische Leistung von ihrer AC-Seite zu ihrer DC-Seite übertragen und/oder umgekehrt.

Zumindest die erste DC-Einheit ist als Energieerzeugungseinheit, insbesondere als PV-Anlage mit zumindest einem PV-Generator, ausgebildet. Eine Frequenz und eine Amplitude der AC-Spannung und/oder des AC-Stromes auf dem AC-Bus wird durch das Verfahren eingestellt. Insbesondere kann der dritte Leistungswandler die Amplitude der AC-Spannung stabilisieren, indem er die DC-Netzleistung in Abhängigkeit von der AC-Busleistung einstellt. Dabei kann die Frequenz auf dem AC-Bus durch den dritten Leistungswandler eingestellt werden, um ein Leistungsgleichgewicht zwischen der als AC-Leistung in den AC-Bus gespeisten DC-Leistung der DC-Einheiten und der über den dritten Leistungswandler aus dem AC-Bus abgeführten DC-Netzleistung herzustellen. Insbesondere kann der dritte Leistungswandler mittels der eingestellten Frequenz auf dem AC-Bus die in den AC-Bus gespeiste DC-Leistung der DC-Einheiten und damit die AC-Busleistung entsprechend der DC-Netzleistung einstellen. Zusätzlich kann der dritte Leistungswandler die DC-Netzleistung gezielt ändern, wodurch ein Leistungsungleichgewicht im AC-Bus entsteht, und die Frequenz im AC-Bus modifizieren. Die DC-Einheiten können ihre jeweilige DC-Leistung in Abhängigkeit von der Frequenz im AC-Bus einstellen. Durch eine Rückkopplung zwischen Frequenz auf dem AC-Bus und resultierender DC-Netzleistung kann sich somit ein Regelkreis ergeben, der einen weitgehend automatischen Betrieb und den Vorteil einer regelungstechnisch einfachen Realisierung aufweist, beispielsweise mittels entsprechender P(f)-Kennlinien, die insbesondere die Abhängigkeit der DC-Leistung der DC-Einheiten von der Frequenz im AC-Bus vorgibt.

Alternativ oder zusätzlich kann eine f(P)-Regelung im dritten Leistungswandler verwendet werden. Dabei reagiert der dritte Leistungswandler auf ein etwaiges Leistungsungleichgewicht mit einer Frequenzänderung, die wiederum eine Anderung der DC-Leistung einzelner DC-Einheiten hervorrufen kann. So kann beispielsweise eine Änderung der Einstrahlung auf den PV-Generator durch eine Erhöhung der Leistung einer anderen DC-Einheit, die z.B. einen Speicher umfasst, kompensiert werden, bevor mit einer Änderung der DC-Netzleistung reagiert werden muss. Dadurch kann das Leistungsgleichgewicht wieder hergestellt und die Frequenz im AC-Bus auf einen Sollwert eingestellt werden.

In einer Ausführungsform betreibt der erste Leistungswandler die erste DC-Einheit in einem Arbeitspunkt maximaler Leistung und wandelt die erste DC-Leistung in einen ersten AC-Strom. Der erste Leistungswandler speist den ersten AC-Strom in den AC-Bus ein, wobei der erste AC-Strom der AC-Spannung im AC-Bus folgt. Insbesondere für den Betrieb einer PV-Anlage ist es sinnvoll, den PV-Generator oder die PV-Generatoren möglichst im Arbeitspunkt maximaler Leistung, auch MPP genannt, zu betreiben, um den Ertrag zu maximieren. Die Aufgabe, diesen Arbeitspunkt maximaler Leistung zu finden und die PV-Generatoren in diesem Punkt zu betreiben, kann ein sogenannter MPP-Tracker übernehmen, der im ersten Leistungswandler verbaut sein kann.

In einer Ausführungsform wird die zweite DC-Leistung durch die zweite DC-Einheit erzeugt, gespeichert und/oder verbraucht. Die zweite DC-Leistung wird dabei vom zweiten Leistungswandler in einen zweiten AC-Strom gewandelt und in den AC-Bus eingespeist, wobei der zweite AC-Strom der AC-Spannung im AC-Bus folgt. Die zweite DC-Einheit kann z. B. eine weitere DC-Energieerzeugungseinheit, z. B. eine weitere PV-Anlage, ein DC-Verbraucher, wie z. B. Elektrolyseur, oder ein DC-Speicher, z. B. eine Batterie, sein. Der zweite Leistungswandler kann dabei eingerichtet sein, die zweite DC-Einheit in einem einstellbaren Arbeitspunkt zu betreiben, beispielsweise im Arbeitspunkt maximaler Leistung eines PV-Generators oder in einem Arbeitspunkt mit maximalem Wirkungsgrad eines Elektrolyseurs; im Falle eines Speichers als zweite DC-Einheit kann der Leistungsaustausch mit dem Speicher durch den zweiten Leistungswandler eingestellt werden.

In einer Ausführungsform wird die DC-Netzleistung durch an das DC-Netz angeschlossene DC-Netzteilnehmer erzeugt, gespeichert und/oder verbraucht. Die DC-Netzleistung, die vom dritten Leistungswandler in das DC-Netz eingespeist wird, kann dabei von der Summe der Leistungen der DC-Netzteilnehmer abweichen. Etwaige Leistungsungleichgewichte im DC-Netz können über eine Verbindung des DC-Netzes mit einem AC-Netz ausgeglichen werden, beispielsweise mit einem übergeordneten Energieversorgungsnetz, mit dem elektrische Leistung über einen geeigneten Netzaustauschwandler ausgetauscht werden kann. Dieser Netzaustauschwandler kann dabei für den stabilen Betrieb des DC-Netzes zuständig sein und über entsprechende Mess-, Steuer- und Regelungstechnik sowie ausreichende Leistungsreserven verfügen, um das DC-Netz bei Bedarf auch ausschließlich mit elektrischer Leistung aus dem AC-Netz stabil zu betreiben.

Der sichere Betrieb des DC-Netzes und insbesondere der DC-Netzteilnehmer wird dabei nicht durch die Verbindung mit den entfernten DC-Einheiten beeinträchtigt. Insbesondere bewirkt die galvanische Trennung der entfernten DC-Einheiten eine Entkopplung der Potentiale des DC-Netzes von etwaigen Isolations- und/oder Ableitstromeffekten, die an den entfernten DC-Einheiten auftreten können. Insgesamt ermöglicht die vorliegende Erfindung somit eine einfache, kostengünstige Integration von Speichern und lokalen Energieerzeugungseinheiten in die Energieversorgung über ein DC-Netz und erweist sich als besonders vorteilhaft zur Anwendung in industriellen DC-Netzen, die z.B. eine Fabrik mit Strom aus regenerativen Energiequellen versorgen können.

In einer Ausführungsform weist das Verfahren ein Austauschen von Leistung zwischen dem AC-Bus und einer weiteren DC-Einheit über einen weiteren Leistungswandler auf, wobei eine weitere DC-Leistung der weiteren DC-Einheit über den weiteren Leistungswandler in eine weitere AC-Leistung gewandelt wird und/oder umgekehrt. Hierbei kann die weitere DC-Leistung durch die weitere DC-Einheit erzeugt, gespeichert und/oder verbraucht werden. Die weitere DC-Einheit kann insbesondere eine weitere DC-Energieerzeugungseinheit, z.B. eine weitere PV-Anlage, einen DC-Verbraucher, wie z.B. einen Elektrolyseur, oder einen DC-Speicher, z.B. eine Batterie umfassen. Der weitere Leistungswandler kann dabei eingerichtet sein, die weitere DC-Einheit in einem einstellbaren Arbeitspunkt zu betreiben.

Das Verfahren bietet den Vorteil, dass Frequenz und/oder Amplitude der AC-Spannung und/oder des AC-Stromes des AC-Busses relativ frei gewählt werden, ohne dabei den teils strengen Anforderungen eines öffentlichen AC-Netzes zu unterliegen. Nichtsdestotrotz können Standardkomponenten, z.B. Schütze, Sicherungen, Überwachung, Transformator usw., verwendet werden, die auch für das herkömmliche öffentliche AC-Versorgungsnetz geeignet sind. So ist es beispielsweise möglich, einen herkömmlichen Transformator zur galvanischen Trennung des AC-Busses vom DC-Netz einzusetzen. Es ist auch möglich, den eingesetzten Transformator auf der AC-Busseite zu erden. Zudem ist ein besonders verlustarmer Betrieb der Leistungswandler möglich, indem die Amplitude der AC-Spannung auf dem AC-Bus, optional auf beiden Seiten des Transformators, im optimalen Verhältnis zur Amplitude der DC-Spannung im DC-Netz und optional an den DC-Einheiten eingestellt wird. Darüber hinaus können die einstellbaren Parameter des AC-Busses, d.h. insbesondere Frequenz, Spannung und/oder Blindleistung, zur Steuerung und Regelung der elektrischen Leistungsübertragung im Energieversorgungssystem verwendet werden. Insbesondere durch eine Kombination von geeigneten Kennlinien, die Abhängigkeiten zwischen Frequenz auf dem AC-Bus und ausgetauschter Leistung der beteiligten Leistungswandler definieren, kann das Energieversorgungssystem stabil und mit zuverlässig vorhersagbarer Leistung betrieben werden.

Eine Vorrichtung zum Austausch elektrischer Leistung in einem Energieversorgungssystem mit mindestens einer Energieerzeugungseinheit weist einen AC-Bus auf, an den ein erster Leistungswandler und ein zweiter Leistungswandler angeschlossen sind, wobei der erste Leistungswandler ausgebildet ist, eine erste DC-Leistung einer ersten DC-Einheit in erste AC-Leistung zu wandeln und/oder umgekehrt, und wobei der zweite Leistungswandler ausgebildet ist, eine zweite DC-Leistung einer zweiten DC-Einheit in zweite AC-Leistung zu wandeln und/oder umgekehrt. Der erste und der zweite Leistungswandler sind AC-seitig mit einem AC-Bus verbunden, so dass die erste und die zweite AC-Leistung als AC-Busleistung über den AC-Bus übertragbar sind. Die Vorrichtung weist einen Transformator auf, der zwischen dem AC-Bus und einer AC-Seite eines dritten Leistungswandlers angeordnet ist, wobei der Transformator eingerichtet ist, die AC-Busleistung zu übertragen und eine galvanische Trennung zu bewirken. Der dritte Leistungswandler ist zur Umwandlung der über den Transformator übertragenen AC-Busleistung in DC-Netzleistung und/oder umgekehrt eingerichtet. Auf einer DC-Seite des dritten Leistungswandlers ist ein DC-Netz anschließbar, in dem DC-Netzteilnehmer mit der DC-Netzleistung betreibbar sind. Zumindest die erste DC-Einheit ist als Energieerzeugungseinheit, insbesondere als PV-Anlage mit zumindest einem PV-Generator ausgebildet. Der dritte Leistungswandler ist dazu ausgebildet, eine Frequenz und eine Amplitude der AC-Spannung auf dem AC-Bus einzustellen. Dabei kann insbesondere eine Steuereinheit des dritten Leistungswandlers die Frequenz auf dem AC-Bus in Abhängigkeit von der DC-Netzleistung und die DC-Netzleistung in Abhängigkeit von der AC-Busleistung einstellen.

Die Vorrichtung ermöglicht es damit, mehrere DC-Einheiten, insbesondere Energieerzeugungseinheiten, Speicher und Verbraucher, über jeweilige Leistungswandler, z.B. DC/AC-Wandler, AC-seitig zu einem AC-Bus zu koppeln und die im AC-Bus gesammelte elektrische Leistung der DC-Einheiten mit dem DC-Netz auszutauschen. Der AC-Bus ist dabei über den Transformator galvanisch getrennt und über den dritten Leistungswandler mit dem DC-Netz verbunden.

Auf dem AC-Bus kann die Frequenz und/oder die Amplitude der AC-Spannung und/oder des AC-Stromes optimal ausgelegt werden. Optimal kann sich hierbei an der Auslegung des Gesamtsystems orientieren und insbesondere auch von aktuellen Gegebenheiten, z.B. der Sonneneinstrahlung auf eine PV-Anlage und der dadurch aktuell verfügbaren DC-Leistung abhängen. Es ist ebenso denkbar, die Frequenz und/oder die Amplitude im AC-Bus zumindest in Grenzen variabel einstellbar zu gestalten sowie die Leistungswandler in Abhängigkeit von der aktuellen Frequenz und/oder Amplitude im AC-Bus zu betreiben, insbesondere mittels f(P)- und/oder P(f)-Kennlinien.

Damit ist das DC-Netz, bei dem die DC-Spannung im Wesentlichen fest sein kann, über den dritten Leistungswandler und den Transformator mit dem AC-Bus verbunden. An den AC-Bus, der mit optimaler - möglicherweise auch in Grenzen variabler - Frequenz und/oder Amplitude der AC-Spannung und/oder des AC-Stromes betrieben werden kann, sind mehrere DC-Quellen und/oder DC-Verbraucher über jeweilige Leistungswandler parallel angeschlossen und stellen ihre Leistung über den AC-Bus dem DC-Netz zur Verfügung, wobei sonstige Rückwirkungen auf den sicheren Betrieb des DC-Netzes weitgehend vermieden werden.

In einer Ausführungsform der Vorrichtung ist der erste Leistungswandler ausgebildet, die erste DC-Einheit in einem Arbeitspunkt maximaler Leistung zu betreiben und die erste DC-Leistung in einen ersten AC-Strom umzuwandeln und in den AC-Bus einzuspeisen, wobei der erste AC-Strom der AC-Spannung im AC-Bus folgt.

In einer Ausführungsform der Vorrichtung ist an den AC-Bus eine weitere DC-Einheit über einen weiteren Leistungswandler anschließbar, wobei der weitere Leistungswandler ausgebildet ist, eine weitere DC-Leistung der weiteren DC-Einheit in eine weitere AC-Leistung zu wandeln und/oder umgekehrt. Die zweite und/oder die weitere DC-Einheit kann dabei eingerichtet sein, die jeweilige DC-Leistung zu erzeugen, zu speichern und/oder zu verbrauchen.

Optional kann die zweite DC-Einheit als weitere Energieerzeugungseinheit, insbesondere als weitere PV-Anlage mit zumindest einem weiteren PV-Generator ausgebildet sein. Optional kann der zweite Leistungswandler dann ausgebildet sein, die zweite DC-Einheit in einem Arbeitspunkt maximaler Leistung zu betreiben und die zweite DC-Leistung in einen zweiten AC-Strom umzuwandeln und in den AC-Bus einzuspeisen, wobei der zweite AC-Strom der AC-Spannung im AC-Bus folgt.

In einer Ausführungsform der Vorrichtung ist der Transformator auf seiner an den AC-Bus angeschlossenen Seite geerdet.

In einer Ausführungsform der Vorrichtung ist die Steuerung zumindest teilweise durch den ersten, den zweiten und/oder den dritten Leistungswandler realisiert. Der erste, der zweite und/oder der dritte Leistungswandler kann dabei insbesondere als sogenannter aktiver Leistungswandler realisiert sein. Aktive Leistungswandler weisen hierbei eine Brückenschaltung auf, in der Leistungshalbleiterschalter aktiv von einer Steuerung zur elektrischen Leistungswandlung angesteuert werden. Die Steuerung der Leistungshalbleiterschalter und die Steuerung der Vorrichtung kann dabei auf der gleichen Hardware realisiert werden. Alternativ oder zusätzlich kann die Steuerung der Vorrichtung zumindest teilweise außerhalb der Vorrichtung realisiert sein. Bevorzugt kommuniziert eine außerhalb der Vorrichtung realisierte Steuerung in einem solchen Fall mit der Vorrichtung bzw. den einzelnen Leistungswandlern über eine Kommunikationsschnittstelle.

Ein Energieversorgungssystem kann eine solche vorstehend beschriebene Vorrichtung aufweisen. Das Energieversorgungssystem kann weiter eine erste DC-Einheit aufweisen, die bevorzugt als PV-Anlage mit zumindest einem PV-Generator ausgebildet ist. Eine zweite DC-Einheit der Vorrichtung kann ebenfalls als PV-Generator oder als Energiespeicher ausgebildet sein. An ein DC-Netz der Vorrichtung können DC-Netzteilnehmer zur Entnahme von DC-Netzleistung angeschlossen werden. Ein übergeordnetes AC-Versorgungsnetz kann über einen Netzaustauschwandler zur Versorgung des DC-Netzes an das DC-Netz angeschlossen werden.

In einer Ausführungsform weist das Energieversorgungssystem die Steuerung auf, welche eingerichtet ist, einen Sollwert für die DC-Netzleistung zu empfangen und den ersten Leistungswandler, den zweiten Leistungswandler und/oder den dritten Leistungswandler so zu betreiben, dass die DC-Netzleistung dem Sollwert entspricht. Ein geeigneter Sollwert kann einen absoluten Wert umfassen, beispielsweise eine aktuell zur Versorgung des DC-Netzes benötigte Leistung, oder einen generischen Wert aufweisen, beispielsweise die maximal verfügbare regenerativ erzeugte Leistung aus dem AC-Bus abrufen.

Es ist dabei möglich, die DC-Einheiten und die jeweiligen Leistungswandler, über die die DC-Einheiten an den AC-Bus angeschlossen sind, mittels der Steuerung so zusammenwirken zu lassen, dass der AC-Bus als Ganzes spezielle Funktionen für das DC-Netz anbieten kann. Z.B. kann dem DC-Netz über den dritten Leistungswandler eine sogenannte DC-Regelleistung zur Verfügung gestellt werden, die zur Spannungsstabilisierung im DC-Netz dient und zwischen den DC-Einheiten und dem DC-Netz über die jeweiligen Leistungswandler und den AC-Bus ausgetauscht wird.

Damit ermöglicht es die Vorrichtung, für die Anbindung einer PV-Anlage einen AC-Bus zur Verfügung zu stellen, der getrennt von einem öffentlichen AC-Versorgungsnetz betrieben werden und daher so ausgelegt werden kann, dass einerseits AC-Standardkomponenten wie Sicherungen, Umrichter, Transformatoren, Fehlerstromerkennung, Lasttrennschalter, AC-Kabel u. ä. eingesetzt werden können und andererseits einige Anforderungen an übliche öffentliche AC-Versorgungsnetze nicht zwingend umgesetzt werden müssen, z.B. die normative Vorgabe einer Sollspannung oder Sollfrequenz, aber bei Bedarf umgesetzt werden können. Dies kann genutzt werden, um einen möglichst einfachen und effizienten Aufbau zu erreichen, wobei insbesondere Verluste entlang langer DC-Leitungen und/oder aufgrund ineffizienter galvanisch trennender DC/DC-Umwandlung sowie etwaige störende Einflüsse von Potentialverschiebungen oder Ableitströmen seitens der Energieerzeugungseinheiten vermieden werden können.

Die Vorrichtung kann Kosten sparen und Verluste für minimieren, insbesondere in Anwendungen, bei denen mehrere DC-Einheiten, insbesondere DC-Quellen, galvanisch getrennt und unter Umständen über größere Distanzen, beispielsweise über mehrere Hundert Meter, an ein DC-Netz angeschlossen werden sollen.

Der Transformator zur galvanischen Trennung kann möglichst nah am dritten Leistungswandler angeordnet werden, um z.B. einen möglichst großen Teil der Verkabelung galvanisch getrennt vom DC-Netz zu haben.

### Figuren

Im Folgenden wird die Erfindung mithilfe von Figuren näher erläutert.
- **Fig. 1**: zeigt beispielhaft ein Energieversorgungssystem,
- **Fig. 2**: zeigt beispielhaft ein Verfahren zum Betrieb eines Energieversorgungssystems;
- **Fig. 3**: zeigt schematisch eine Ausführungsform einer Energieversorgungsanlage und
- **Fig. 4**: zeigt schematisch eine weitere Ausführungsform einer Energieversorgungsanlage.

In den Figuren sind gleiche oder ähnliche Elemente mit den gleichen Bezugszeichen bezeichnet.

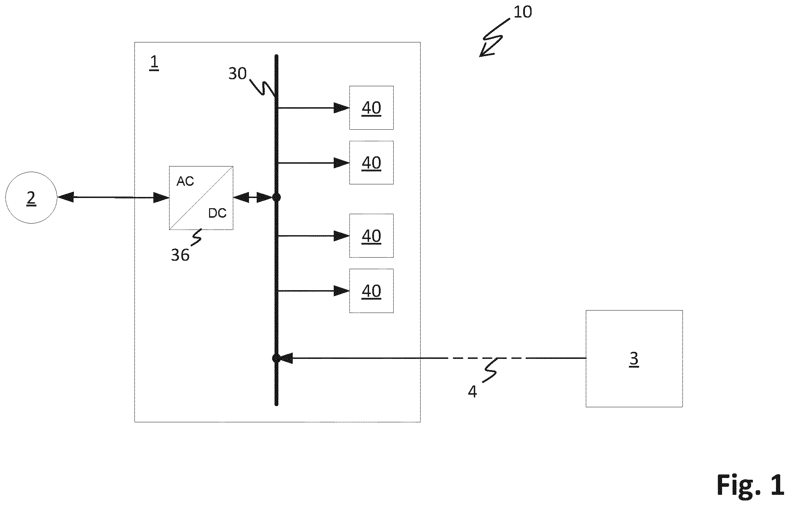

In Fig. 1 ist ein beispielhaftes Energieversorgungssystem 10 dargestellt, das einen DC-Abschnitt 1, ein AC-Versorgungsnetz 2 und einen Energieerzeuger 3 umfasst. Das Energieversorgungssystem 10 dient insbesondere zur Versorgung von DC-Netzteilnehmern 40 im DC-Abschnitt 1 mit elektrischer Leistung, die insbesondere über einen Netzaustauschwandler 36 aus einem AC-Versorgungsnetz 2 bereitgestellt wird. Dabei kann der Netzaustauschwandler 36 elektrische Leistung aus dem AC-Versorgungsnetz 2 entnehmen in ein DC-Netz 30 einspeisen, an das die DC-Netzteilnehmer 40 angeschlossen sind. Für den stabilen Betrieb des DC-Netzes 30 kann der Netzaustauschwandler 36 eine geeignete Regelung aufweisen, die beispielsweise Leistungsungleichgewichte im DC-Netz 30 durch Variation der Netzaustauschleistung ausgleicht und dadurch insbesondere die DC-Spannung im DC-Netz 30 in einem zulässigen Bereich hält.

Der Energieerzeuger 3 ist außerhalb des DC-Abschnitts 1 angeordnet und über eine Verbindung 4 mit dem DC-Netz 30 verbunden. Um elektrische Leistung vom Energieerzeuger 3 über die Verbindung 3 in das DC-Netz 30 einspeisen zu können, müssen je nach konkreter Ausführung des Energieerzeugers 3 bestimmte Randbedingungen und Richtlinien beachtet werden. Insbesondere kann aus Isolations- und Sicherheitsgründen eine galvanische Trennung zwischen dem Energieerzeuger 3 und dem DC-Netz 30 erforderlich sein. Abhängig von der Leistungsfähigkeit des Energieerzeugers 3 kann dessen Leistung einen Teil der im DC-Netz 30 benötigten elektrischen Leistung bereitstellen und/oder das DC-Netz 30 zumindest zeitweise vollständig mit elektrischer Leistung versorgen; etwaige darüberhinausgehende Leistung des Energieerzeugers 3 kann als Überschussleistung über den Netzaustauschwandler 36 in das AC-Versorgungsnetz 2 eingespeist und/oder innerhalb des Energieversorgungssystems 10 (zwischen-)gespeichert werden.

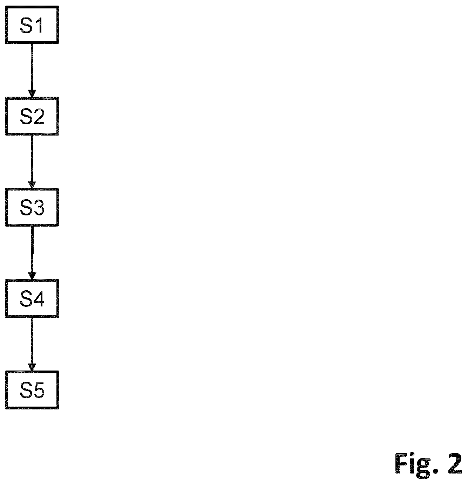

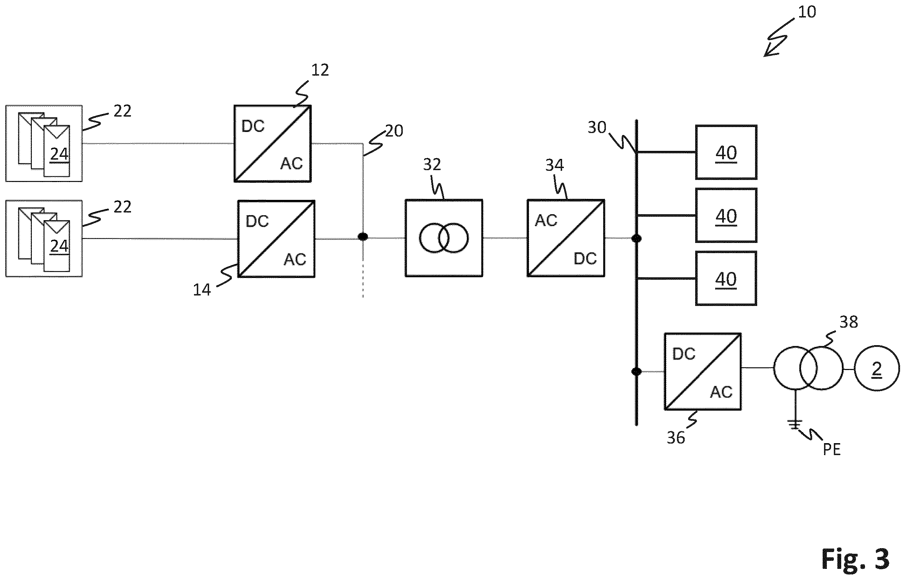

In Fig. 2 ist schematisch ein Verfahren zum Betrieb eines Energieversorgungssystems 10 gezeigt. Ein konkretes Energieversorgungssystem 10 mit zwei DC-Energieerzeugungseinheiten als DC-Einheiten, z. B. zwei PV-Anlagen 22, die den Energieerzeuger 3 bilden und deren Leistung über die Verbindung 4 in den DC-Abschnitt 1 gelangen soll, ist beispielhaft in Fig. 2 oder Fig. 3 dargestellt. Das Verfahren weist die Schritte auf:
Schritt S1: Austauschen von Leistung zwischen einer ersten PV-Anlage 22 und einem AC-Bus 20 über einen ersten Leistungswandler 12, wobei eine erste DC-Leistung der ersten PV-Anlage 22 über den ersten Leistungswandler 12 in eine erste AC-Leistung gewandelt wird und/oder umgekehrt.
Schritt S2: Austauschen von Leistung zwischen einer zweiten DC-Einheit 22, 26, 28 und dem AC-Bus 20 über einen zweiten Leistungswandler 14, 16, 18, wobei eine zweite DC-Leistung der zweiten DC-Einheit 22, 26, 28 über den zweiten Leistungswandler 14, 16, 18 in eine zweite AC-Leistung gewandelt wird und/oder umgekehrt. Die zweite DC-Einheit kann für das Beispiel von Fig. 2 eine zweite PV-Anlage 22 sein. Für das Beispiel von Fig. 3 kann die zweite DC-Einheit z. B. die zweite PV-Anlage 22, eine Batterie 26 oder ein Verbraucher 28, wie z. B. ein Elektrolyseur, sein. Weitere DC-Einheiten können z. B. die zweite oder eine weitere PV-Anlage 22, die Batterie 26 oder eine weitere Batterie 26 und/oder ein Verbraucher 28 und/oder ein weiterer Verbraucher 28 sein.
Schritt S3: Zusammenführen der ersten und der zweiten AC-Leistung zu einer AC-Busleistung des AC-Busses 20.
Schritt S4: Übertragen der AC-Busleistung über einen Transformator 32.
Schritt S5: Austauschen von Leistung zwischen dem AC-Bus 20 und einem DC-Netz 30 über einen dritten Leistungswandler 34, wobei die vom Transformator 32 übertragene AC-Busleistung über den dritten Leistungswandler 34 in eine DC-Netzleistung gewandelt wird und/oder umgekehrt.

Zumindest die erste DC-Einheit 22 ist als Energieerzeugungseinheit, insbesondere als PV-Anlage 22 mit zumindest einem PV-Generator 24 ausgebildet. Auf dem AC-Bus 32 wird eine Frequenz und/oder eine Amplitude der AC-Spannung und/oder des AC-Stromes eingestellt, wobei der dritte Leistungswandler 34 die DC-Netzleistung in Abhängigkeit von der AC-Busleistung einstellt. Dabei kann die DC-Netzleistung vorgegeben sein und der dritte Leistungswandler sorgt für einen ausgeglichenen Leistungszu- und abfluss im AC-Bus. Das Verfahren wird z. B. durch eine Steuerung ausgeführt, die Teil der Energieversorgungsanlage 10 sein kann.

In Fig. 3 ist schematisch eine Ausführungsform eines Energieversorgungssystems 10 mit zwei PV-Anlagen 22 dargestellt. Jede der PV-Anlagen 22 weist einen oder mehrere PV-Generatoren 24 auf. Die von den PV-Anlagen 22 erzeugte DC-Leistung wird für jede der PV-Anlagen 22 jeweils von einem Leistungswandler 12, 14, die als Wechselrichter ausgebildet sein können, in AC-Leistung umgewandelt. Die AC-Leistungen der Leistungswandler 12, 14 werden auf dem AC-Bus 20 als AC-Busleistung zusammengeführt. Neben den beiden PV-Anlagen 22 können weitere DC-Einheiten über weitere Leistungswandler an den AC-Bus 20 angeschlossen werden. Die AC-Leistung auf dem AC-Bus 20 wird über einen Transformator 32 an den dritten Leistungswandler 34 übertragen. Die über den Transformator 32 übertragene AC-Leistung wird über den dritten Leistungswandler 34, der als aktiver Gleichrichter ausgebildet sein kann, in eine DC-Netzleistung gewandelt, die mit dem DC-Netz 30 ausgetauscht wird und dadurch DC-Netzteilnehmer 40 zur Verfügung steht. Das DC-Netz 30 kann z. B. ein industrielles DC-Netz sein, das über einen Netzaustauschwandler 36 mit einem öffentlichen AC-Versorgungsnetz 2 Leistung austauschen kann. Hierfür kann der Netzaustauschwandler 36 AC-seitig über einen Transformator, insbesondere über einen geerdeten Mittelspannungs-Transformator 38 mit dem AC-Versorgungsnetz 2 verbunden sein.

Eine solche Auslegung des Energieversorgungssystems 10 erlaubt es, einen

Energieerzeuger 3 mit mehreren DC-Einheiten 22 mit dem DC-Netz 30 zu verbinden, ohne die einzelnen Leistungswandler 12, 14 mit galvanischer Trennung auslegen zu müssen. Die galvanische Trennung der PV-Anlagen 22 von dem DC-Netz 30 kann z. B. über den Transformator 32 realisiert werden. Dies erlaubt eine kostengünstigere Realisierung eines normgerechten und sicheren Energieversorgungssystems 10, da über die galvanische Trennung des Transformators 32 mehrere DC-Einheiten 22 galvanisch getrennt mit dem DC-Netz 30 verbunden und koordiniert betrieben sowie abgesichert werden können.

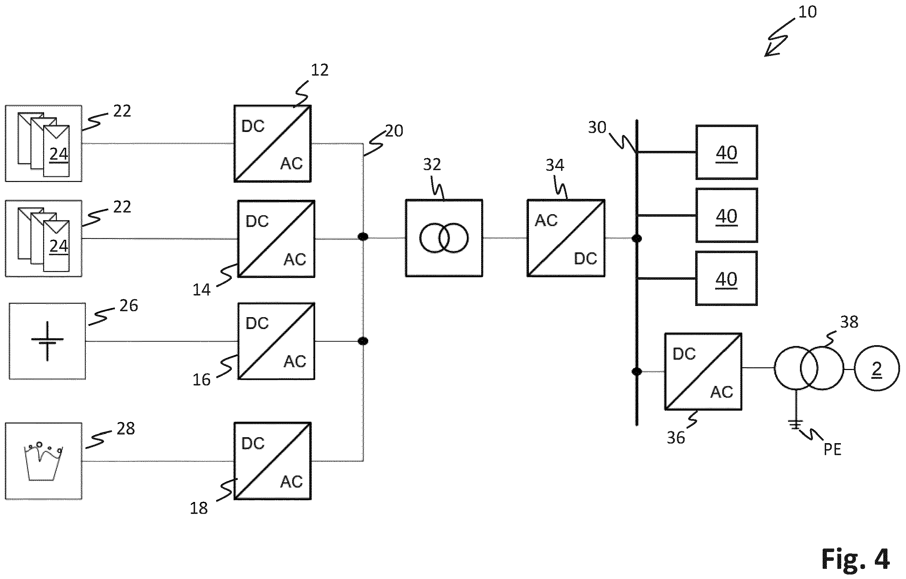

In Fig. 4 ist ein weiteres Ausführungsbeispiel eines Energieversorgungssystems 10 dargestellt. Neben zwei PV-Anlagen 22, die über einen ersten und einen zweiten Leistungswandler 12, 14 an einen AC-Bus 20 angeschlossen sind, ist ein Speicher 26 für elektrische Energie vorgesehen, der z. B. als Batterie ausgebildet ist und elektrische Energie speichern und abgeben kann. Der Speicher 26 ist über den Leistungswandler 16 an den AC-Bus 20 angeschlossen und kann über den Leistungswandler 16 elektrische DC-Leistung beim Laden aufzunehmen und beim Entladen abzugeben. Der Leistungswandler 16 ist eingerichtet, die DC-Leistung des Speichers 26 in AC-Leistung zu wandeln und mit dem AC-Bus 20 auszutauschen. In der Energieversorgungsanlage 10 ist weiter ein DC-Verbraucher 28, z. B. ein Elektrolyseur, vorgesehen. Der DC-Verbraucher 28 kann über den Leistungswandler 28 aus dem AC-Bus 20 mit elektrischer Leistung versorgt werden.

Auf dem AC-Bus 20 werden die von den Leistungswandlern 12, 14, 16, 18 mit dem AC-Bus ausgetauschten elektrischen Leistungen in eine AC-Busleistung zusammengeführt und über den Transformator 32 zu dem dritten Leistungswandler 34 übertragen. Über den dritten Leistungswandler 34 wird elektrische Leistung mit dem DC-Netz 30 ausgetauscht, an das DC-Netzteilnehmer 40 angeschlossen sein können. Die DC-Netzteilnehmer 40 können z. B. DC-Verbraucher oder DC-Erzeuger sein. Auch ein Leistungsaustausch zwischen DC-Netz 40 und dem AC-Versorgungsnetz 2 ist über den Netzaustauschwandler 36 und ggf. den Mittelspannungs-Transformator 38 möglich.

Durch den Transformator 32 sind die DC-Einheiten 22, 26, 28 galvanisch getrennt von dem DC-Netz 30. Die galvanische Trennung des Transformators 32 ist insbesondere für eine große Distanz zwischen DC-Netz 30 und Energieerzeuger 3 sowie eine Vielzahl von DC-Einheiten 22, 26, 28 ausreichend, so dass die den DC-Einheiten 22, 26, 28 einzeln zugeordneten Leistungswandler 12, 14, 16, 18 ohne galvanische Trennung ausgeführt sein können.

Auf dem AC-Bus 20 kann die AC-Spannung, z. B. die Amplitude und/oder die Frequenz der AC-Spannung in gewissen Grenzen vorgegeben und entsprechend eingestellt werden. Die Werte hierfür können weitgehend unabhängig davon gewählt werden, welche Werte ein öffentliches Netz, beispielsweise das AC-Versorgungsnetz 2 erfordern würde.

In einer möglichen Systemauslegung kann die DC-Spannung im DC-Netz 30 vorgegeben sein, z. B. durch Vorgaben an ein industrielles DC-Netz. Die von den PV-Anlagen 22 abgegebene DC-Spannung ist in der Regel durch die Auslegung der PV-Generatoren 24 vorgegeben und durch die schwankende Einstrahlung der Sonne ebenfalls variabel. Die Betriebsspannungen von Batterie und/oder Elektrolyseur können bauartbedingt durch die Einheiten vorgegeben sein. Das offenbarte Energieversorgungssystem 10 bietet eine Reihe von Freiheitsgraden, um diese in der Regel unterschiedlichen Betriebsspannungen, also die Spannungen im Energieerzeuger 2 und die Spannung im DC-Netz miteinander zu koppeln. Beispiele für Parameter, die in der Systemauslegung optimiert werden können, um einen gewünschten Leistungsfluss zwischen Energieerzeuger 2 und DC-Netz 1 sowie AC-Versorgungsnetz 3 möglichst verlustarm und effizient einzustellen, sind die Amplitude und/oder die Frequenz der AC-Spannung auf dem AC-Bus 20 sowie das Übersetzungsverhältnis des Transformators 32.

Eine Steuerung eines Energieversorgungssystems 10 gemäß Fig 3 oder Fig. 4 wird im Folgenden beschrieben.

Die DC-Spannung im DC-Bus 30 wird zunächst als gegeben angenommen. Der dritte Leistungswandler 34 ist als leistungselektronische Brückenschaltung ausgeführt, die getaktet betrieben wird, wobei durch die konkrete Taktung eine Frequenz der AC-seitigen Spannung sowie ein Übersetzungsverhältnis der AC-seitigen Spannung relativ zur DC-seitigen Spannung eingestellt wird. Der dritte Leistungswandler 34 bestimmt somit Frequenz und Amplitude der Spannung im AC-Bus 20 gemäß Fig. 3 und Fig. 4. Die Frequenz kann fest, z.B. bei 50 Hz oder auch 74,1 Hz eingestellt werden, oder variabel in einem einstellbaren Bereich sein, z.B. in einem zulässigen Frequenzband um eine Nominalfrequenz von z.B. 60 Hz oder auch 41,3 Hz.

Die derart hinsichtlich Frequenz und Amplitude vorgegebene Spannung des AC-Bus 20 wird von den Leistungswandlern 12, 14, 16, 18 am AC-Bus 20 detektiert und die Leistungswandlern 12, 14, 16, 18 synchronisieren ihre Einspeisung mit dieser AC-Spannung, d.h. sie prägen einen AC-Strom in die im wesentlichen gegebene AC-Spannung im AC-Bus 20 ein.

In der Ausführungsform gemäß Fig. 3 kann der dritte Leistungswandler 34 zusätzlich derart geregelt werden, dass die PV-Generatoren 24 an einem Arbeitspunkt maximaler Leistung betrieben werden. Die Leistungswandler 12, 14 können dazu mit einem festem Spannungsübersetzungsverhältnis betrieben werden, beispielsweise mit einer weitgehend festen Taktung mit optimalem Wirkungsgrad. Eine Änderung der AC-Spannung im AC-Bus 20 durch den dritten Leistungswandler 34 wird damit von den Leistungswandlern 12, 14 direkt an die PV-Generatoren 24 durchgereicht und bewirkt eine Anderung des Arbeitspunktes der PV-Generatoren 24, d.h. die DC-Spannung der PV-Generatoren 24 steigt und fällt mit der eingestellten AC-Spannung im AC-Bus 20. Der dritte Leistungswandler 34 kann nun die aktuell umgesetzte elektrische Leistung in Abhängigkeit der AC-Spannung erfassen und die AC-Spannung erhöhen bzw. verringern, um die Leistung zu maximieren. So stellt sich im AC-Bus 20 diejenige Spannung ein, bei welcher die PV-Generatoren 24 unter Berücksichtigung der Übersetzungsverhältnisse der Leistungswandler 12, 14 ihre maximale Leistung abgeben. Sollte es notwendig oder gewünscht sein, die über den dritten Leistungswandler 34 in das DC-Netz 30 eingespeiste Leistung zu reduzieren, beispielsweise wenn ein Überangebot an DC-Leistung im DC-Netz 30 vorliegt, kann die AC-Spannung im AC-Bus 20 durch den dritten Leistungswandler 34 erhöht oder verringert werden, um den Arbeitspunkt der PV-Generatoren 24 in Richtung Leerlauf bzw. Kurzschluss zu verschieben und so die Leistung gegenüber dem Arbeitspunkt mit maximaler Leistung zu verringern.

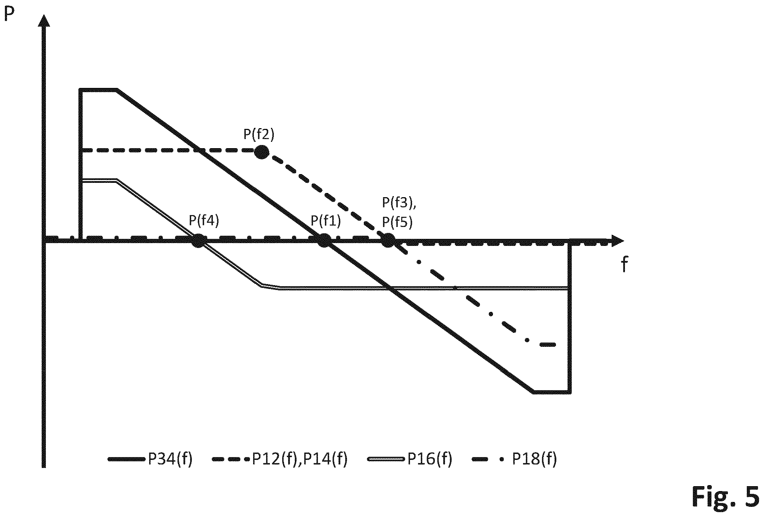

Eine Ausführungsform der Regelung des Energieversorgungssystems 10, die insbesondere auf das Energieversorgungssystem 10 gemäß Fig. 4 anwendbar ist, kann den Energiespeicher 26 am AC-Bus 20 effizient nutzen. Die Amplitude und die Frequenz der AC-Spannung im AC-Bus 20 werden dabei zunächst durch den dritten Leistungswandler 34 eingestellt. Für die Amplitude und die Frequenz der AC-Spannung im AC-Bus 20 werden allen beteiligten Leistungswandlern 12, 16, 34 Sollwerte vorgegeben. Dabei hat jeder Leistungswandler 12, 16, 34 eine spezifische P(f)- bzw. f(P)-Kennlinie (vergleiche Fig. 5), die die jeweils umzusetzende Leistung P in Abhängigkeit der aktuellen Frequenz f im AC-Bus 20 bzw. die einzustellende Frequenz in Abhängigkeit der aktuellen DC-Netzleistung vorgibt.

Konkret können Kennlinien P12, P14, P34 für die Leistungswandler 12, 14, 34 und ggf. Kennlinien P16, P18 für die Leistungswandler 16, 18 vorgesehen sein. Ein Ausführungsbeispiel solcher Kennlinien ist in Fig. 5 beispielhaft dargestellt. In Fig. 5 zeigt die horizontale Achse die Frequenz f im AC-Bus 20 und die vertikale Achse den Leistungsfluss P in Energieversorgungssystem 10, wobei positive Werte einen Leistungsfluss P in Richtung des DC-Netzes 30 und umgekehrt bedeuten.

Die Kennlinie P34 des dritten Leistungswandlers weist in diesem Beispiel eine konstante Steigung auf und schneidet die Frequenzachse bei einer Frequenz f1. Dabei kann der dritte Leistungswandler 34 bei einer Frequenz oberhalb einer Schwelle f1 Leistung aus dem AC-Bus 20 in das DC-Netz 30 abgeben (Gleichrichterbetrieb) und bei einer Frequenz unterhalb der Schwelle f1 Leistung aus dem DC-Netz 30 in den AC-Bus 20 einspeisen (Wechselrichterbetrieb). Eine konkrete Vorgabe für einen Leistungsbezug durch das DC-Netz 30 oder eine Entnahme aus dem DC-Netz 30 können insbesondere übergeordnet erfolgen, beispielsweise indem eine maximale Verwertung regenerativ erzeugbarer Energie angestrebt wird und/oder indem Regelleistung auf Basis der Stabilitätsanforderungen des DC-Netzes 30 bereitgestellt wird. Der Leistungswandler 34 legt bei einer konkreten über ihn ausgetauschten Leistung über die f(P)-Kennlinie die Frequenz für den AC-Bus fest und stellt diese sodann ein.

Die Leistungswandler 12, 14 der PV-Anlagen 22 können den jeweiligen Arbeitspunkt der PV-Generatoren 24 grundsätzlich auf deren Arbeitspunkt maximaler Leistung einstellen (sogenanntes Maximum Power Point Tracking, kurz MPP-Tracking). In der jeweiligen Kennlinie P12, P14 geschieht dies bei Frequenzen unterhalb einer Schwelle f2, so dass die maximal mögliche PV-Leistung in den AC-Bus 20 eingespeist wird, solange die Frequenz unterhalb der Schwelle f2 liegt. Oberhalb der Frequenz f2 wird die Leistungsabgabe reduziert und erreicht bei einer Schwelle f3 den Wert Null.

Der Leistungswandler 16 des Speichers 26 arbeitet anhand einer P(f)-Kennlinie P16(f), die eine Schwelle f4 aufweist, bei der der Speicher 26 keine Leistung austauscht, Unterhalb der Schwelle f4 wird der Speicher 26 entladen und oberhalb der Schwelle f4 wird der Speicher 26 geladen.

Die Frequenzen f2, f3, f4 auf den Kennlinien P12, P14, P16 werden hier so gewählt, dass die PV-Anlagen 22 möglichst immer Leistung abgeben können - entweder über den AC-Bus 20 und den dritten Leistungswandler 34 in das DC-Netz 30 oder über den AC-Bus 20 und den Leistungswandler 16 in den Speicher 26. Insbesondere bei der Frequenz f4 wird die maximal mögliche PV-Leistung in das DC-Netz 30 übertragen, wobei keine Leistung mit dem Speicher 26 ausgetauscht wird.

Zwischen den Schwellen f2 und f3 ist die DC-Netzleistung gemäß Kennlinie P34 geringer als die maximal mögliche PV-Leistung, die nichtsdestotrotz abgerufen wird und teilweise über den dritten Leistungswandler 34 in das DC-Netz 30 und teilweise über den Leistungswandler 16 in den Speicher 26 übertragen wird.

Bei der Schwelle f1 findet kein Leistungstransfer über den dritten Leistungswandler 34 statt, und die PV-Leistung fließt praktisch vollständig in den Speicher 30. Dabei kann es je nach Leistungsvermögen des Speicher 26 und aktueller Einstrahlung auf die PV-Anlagen 22 notwendig sein, die PV-Leistung gegenüber der MPP-Leistung gemäß Kennlinie P12, P14 zu reduzieren.

Die Kennlinien können so gewählt werden, dass der Speicher 26 auch zu einem Zeitpunkt geladen werden kann, in welchem keine PV-Leistung zur Verfügung steht. Insbesondere bei der Schwelle f3 kann der dritte Leistungswandler 34 anhand der Kennlinie P34 eine DC-Netzleistung vorgeben, die aus dem DC-Netz 30 über den dritten Leistungswandler 34 in den AC-Bus fließt und von dort über den Leistungswandler 16 gemäß Kennlinie P16 in den Speicher 26 eingespeist wird.

Ein optional zusätzlich in Energieversorgungssystem angeordneter Verbraucher kann über einen Leistungswandler 18 angeschlossen sein, der eine Kennlinie P18 mit der Schwelle f5 umfasst. Unterhalb der Schwelle f5 bezieht der Leistungswandler 18 keine Leistung aus dem AC-Bus 20, d.h. der Leistungsfluss gemäß Kennlinie P34 wird durch den Speicher 26 und/oder die PV-Anlagen 22 bedient. Oberhalb von f5 wird der Elektrolyseur 28 mit einer Leistung gemäß Kennlinie P18 betrieben und entnimmt dem AC-Bus 20 eine entsprechende Leistung, die ggf. in Summe mit der DC-Leistung gemäß Kennlinie P16 aus dem Speicher 26 die DC-Netzleistung gemäß Kennlinie P34 ergibt.

Aufgrund zeitvariabler Einflüsse können die einzelnen Kennlinien P12, P14, P34 und P16 sowie ggf. P18 sich ändern und/oder dadurch vorgegebene Leistungen bei bestimmten Frequenzen nicht umsetzbar sein, beispielsweise aufgrund variierender Einstrahlung auf die PV-Anlagen 22 oder zu vollem oder zu leerem Speicher 26. Dies kann durch das anmeldungsgemäße Verfahren berücksichtigt werden, indem der dritte Leistungswandler 34 die Kennlinie P34 dynamisch anpasst, wenn eine Einstellung einer konkreten Frequenz einen von der Kennlinie P34 abweichenden Leistungsfluss ergibt. Beispielsweise kann die Steigung der Kennlinie P34 umso größer sein, je höher die momentane MPP-Leistung der PV-Anlagen 22 ist. Alternativ oder zusätzlich kann die Lage der Schwellen f1-f5 angepasst werden, beispielsweise indem die Schwellen f1 und f3 zusammenfallen, wenn der Speicher 26 nicht zur Verfügung steht, z.B. weil er vollgeladen ist.

Die Frequenzen f1, f2, f3, f4, f5 können so aufeinander abgestimmt werden, dass ein stabiler und kosteneffizienter Betrieb mit vorhersehbarem Verlauf der zwischen AC-Bus 20 und DC-Netz 30 ausgetauschten Leistung erzielt wird, ohne dass eine übergeordnete Steuerung des AC-Bus 20 bzw. der daran angeschlossenen Leistungswandler notwendig ist. Es ist auch möglich, weitere DC-Einheiten, in den AC-Bus 20 einzubinden, wobei die Anzahl der Schwellen P(fn) entsprechend erhöht werden kann, um die weitere DC-Einheit bedarfsgerecht effizient und koordiniert zu betreiben. Dabei können die Frequenzschwellen f1, f2, f(n) so gewählt werden, dass standardisierte Schutztechnik und sonstige in AC-Netzen übliche Komponenten übernommen werden können.

Das Übersetzungsverhältnis des Transformators 32 kann so gewählt werden, dass alle DC-Einheiten 22, 26, 28 Leistung mit dem AC-Bus 20 austauschen können. Dabei muss berücksichtigt werden, dass einstufige Leistungswandler in der Regel Leistung zwischen einer höheren DC-Spannung in eine niedrigere AC-Spannung transferieren können und umgekehrt, d.h. von einer niedrigeren AC-Spannung in eine höhere DC-Spannung. Der Transformator 32 kann zur galvanischen Trennung möglichst nah am dritten Leistungswandler 34 angeordnet oder darin integriert werden, so dass eine ggf. weit verzweigte Verkabelung des AC-Bus 20 galvanisch getrennt vom DC-Netz 30 verlegt wird.

### Bezugszeichenliste

- 10: Energieversorgungssystem
- 12, 14, 16, 18: Leistungswandler
- 20: AC-Bus
- 22: PV-Anlage
- 24: PV-Generator
- 26: Batterie
- 28: Verbraucher
- 30: DC-Netz
- 32: Transformator
- 34: Leistungswandler
- 36: Netzaustauschwandler
- 38: Mittelspannungs-Transformator
- 40: DC-Netzteilnehmer
- PE: Potential Erde
- S1, S2, S3, S4, S5: Verfahrensschritte

## Patentansprüche

1. Verfahren zum Betrieb eines Energieversorgungssystems (10) mit mindestens einer Energieerzeugungseinheit, mit den Schritten:
• Austauschen von Leistung zwischen einer ersten DC-Einheit (22) und einem AC-Bus (20) über einen ersten Leistungswandler (12), wobei eine erste DC-Leistung der ersten DC-Einheit (22) über den ersten Leistungswandler (12) in eine erste AC-Leistung gewandelt wird und/oder umgekehrt,
• Austauschen von Leistung zwischen einer zweiten DC-Einheit (22, 26, 28) und dem AC-Bus (20) über einen zweiten Leistungswandler (14, 16, 18), wobei eine zweite DC-Leistung der zweiten DC-Einheit (22, 26, 28) über den zweiten Leistungswandler (14, 16, 18) in eine zweite AC-Leistung gewandelt wird und/oder umgekehrt,
• Zusammenführen der ersten und der zweiten AC-Leistung zu einer AC-Busleistung des AC-Busses (20),
• Übertragen der AC-Busleistung über einen Transformator (32),
• Austauschen von Leistung zwischen dem AC-Bus (20) und einem DC-Netz (30) über einen dritten Leistungswandler (34), wobei die vom Transformator (32) übertragene AC-Busleistung über den dritten Leistungswandler (34) in eine DC-Netzleistung gewandelt wird und/oder umgekehrt,
• wobei zumindest die erste DC-Einheit (22) als Energieerzeugungseinheit, insbesondere als PV-Anlage (22) mit zumindest einem PV-Generator (24) ausgebildet ist,
• wobei eine Frequenz und eine Amplitude der AC-Spannung und/oder des AC-Stromes auf dem AC-Bus (20) eingestellt werden, **dadurch gekennzeichnet, dass** der dritte Leistungswandler (34) die Frequenz auf dem AC-Bus (20) in Abhängigkeit von der DC-Netzleistung einstellt und zur Einstellung der AC-Spannung und/oder des AC-Stroms die DC-Netzleistung in Abhängigkeit von der AC-Busleistung einstellt.

2. Verfahren nach Anspruch 1, wobei der erste Leistungswandler (12) die erste DC-Einheit (22) in einem Arbeitspunkt maximaler Leistung betreibt und die erste DC-Leistung in einen ersten AC-Strom umwandelt und in den AC-Bus (20) einspeist, wobei der erste AC-Strom der AC-Spannung im AC-Bus (20) folgt.

3. Verfahren nach Anspruch 1 oder 2, wobei die zweite DC-Leistung durch die zweite DC-Einheit (22, 26, 28) erzeugt, gespeichert und/oder verbraucht wird, wobei die zweite DC-Leistung vom zweiten Leistungswandler (14, 16, 18) in einen zweiten AC-Strom umgewandelt und in den AC-Bus (20) eingespeist wird, wobei der zweite AC-Strom der AC-Spannung im AC-Bus (20) folgt.

4. Verfahren nach einem der vorhergehenden Ansprüche, aufweisend den Schritt: Austauschen von Leistung zwischen dem AC-Bus (20) und einer weiteren DC-Einheit (26, 28) über einen weiteren Leistungswandler (16, 18), wobei eine weitere DC-Leistung der weiteren DC-Einheit (26, 28) über den weiteren Leistungswandler (16, 18) in eine weitere AC-Leistung gewandelt wird und/oder umgekehrt.

5. Verfahren nach einem der vorhergehenden Ansprüche, wobei die DC-Netzleistung durch an das DC-Netz (30) angeschlossene DC-Netzteilnehmer (40) erzeugt, gespeichert und/oder verbraucht wird, und/oder wobei die weitere DC-Leistung durch die weitere DC-Einheit (26, 28) erzeugt, gespeichert und/oder verbraucht wird.

6. Verfahren nach einem der vorhergehenden Ansprüche, wobei die Frequenz auf dem AC-Bus (20) durch den dritten Leistungswandler (34) anhand einer f(P)-Kennlinie (P34) in Abhängigkeit von der DC-Netzleistung eingestellt wird.

7. Verfahren nach einem der vorhergehenden Ansprüche, wobei die DC-Leistung der DC-Einheiten (22, 26, 28) durch den jeweiligen Leistungswandler (12, 14, 16, 18) anhand einer P(f)-Kennlinie (P12, P14, P16, P18) in Abhängigkeit von der Frequenz auf dem AC-Bus (20) eingestellt wird.

8. Vorrichtung zum Austausch elektrischer Leistung in einem Energieversorgungssystem mit mindestens einer Energieerzeugungseinheit, umfassend:
einen AC-Bus (20), an den ein erster Leistungswandler (12) und ein zweiter Leistungswandler (14, 16, 18) angeschlossen sind, wobei der erste Leistungswandler (12) ausgebildet ist, eine erste DC-Leistung einer ersten DC-Einheit (22) in erste AC-Leistung zu wandeln und/oder umgekehrt, und wobei der zweite Leistungswandler (14, 16, 18) ausgebildet ist, eine zweite DC-Leistung einer zweiten DC-Einheit (22, 26, 28) in zweite AC-Leistung zu wandeln und/oder umgekehrt, und
wobei der erste und der zweite Leistungswandler jeweils AC-seitig mit einem AC-Bus (20) verbunden sind, so dass die erste und die zweite AC-Leistung als AC-Busleistung über den AC-Bus (20) übertragbar sind,
wobei die Vorrichtung einen Transformator (32) aufweist, der zwischen dem AC-Bus (20) und einer AC-Seite eines dritten Leistungswandlers (34) angeordnet ist,
wobei der Transformator (32) eingerichtet ist, die AC-Busleistung zu übertragen und eine galvanische Trennung zu bewirken,
wobei der dritte Leistungswandler (34) zur Umwandlung der übertragenen AC-Busleistung in DC-Netzleistung und/oder umgekehrt eingerichtet ist und
wobei auf einer DC-Seite des dritten Leistungswandlers (34) ein DC-Netz (30) anschließbar ist, in dem DC-Netzteilnehmer (40) mit der DC-Netzleistung betreibbar sind,
wobei zumindest die erste DC-Einheit (22) als Energieerzeugungseinheit, insbesondere als PV-Anlage (22) mit zumindest einem PV-Generator (24) ausgebildet ist,
**dadurch gekennzeichnet, dass**
der dritte Leistungswandler (34) dazu ausgebildet ist, eine Frequenz und eine Amplitude der AC-Spannung und/oder des AC-Stromes auf dem AC-Bus (20) einzustellen, wobei insbesondere eine Steuereinheit des dritten Leistungswandlers (34) die Frequenz auf dem AC-Bus (20) in Abhängigkeit von der DC-Netzleistung und die DC-Netzleistung in Abhängigkeit von der AC-Busleistung einstellt.

9. Vorrichtung nach Anspruch 8, wobei der erste Leistungswandler (12) ausgebildet ist, die erste DC-Einheit (22) in einem Arbeitspunkt maximaler Leistung zu betreiben und die erste DC-Leistung in einen ersten AC-Strom umzuwandeln und in den AC-Bus (20) einzuspeisen, wobei der erste AC-Strom der AC-Spannung im AC-Bus (20) folgt.

10. Vorrichtung nach Anspruch 8 oder 9, wobei an den AC-Bus (20) eine weitere DC-Einheit (22, 26, 28) über einen weiteren Leistungswandler (14, 16, 18) anschließbar ist, wobei der weitere Leistungswandler (14, 16, 18) ausgebildet ist, eine weitere DC-Leistung der weiteren DC-Einheit (22, 26, 28) in eine weitere AC-Leistung zu wandeln und/oder umgekehrt.

11. Vorrichtung nach einem der Ansprüche 8 bis 10, wobei die zweite und/oder die weitere DC-Einheit (22, 26, 28) eingerichtet sind, die jeweilige DC-Leistung zu erzeugen, zu speichern und/oder zu verbrauchen.

12. Vorrichtung nach einem der Ansprüche 8 bis 11, wobei der Transformator (32) auf seiner an den AC-Bus (20) angeschlossenen Seite geerdet ist.

13. Vorrichtung nach einem der Ansprüche 8 bis 12, wobei die Steuerung zumindest teilweise durch den ersten, den zweiten und/oder den dritten Leistungswandler (12, 14, 16, 18, 34) und/oder zumindest teilweise außerhalb der Vorrichtung realisiert ist.

14. Energieversorgungssystem (10) umfassend eine Vorrichtung nach einem der Ansprüche 8 bis 13 mit:
- einer ersten DC-Einheit (22), die als PV-Anlage (22) mit zumindest einem PV-Generator (24) ausgebildet ist,
- einer zweiten DC-Einheit (22, 26), die als PV-Anlage (22) mit zumindest einem PV-Generator (24) oder als Energiespeicher (26) ausgebildet ist, und
- einem DC-Netz (30), an das DC-Netzteilnehmer (40) zur Entnahme von DC-Netzleistung und ein übergeordnetes AC-Versorgungsnetz zur Versorgung des DC-Netzes (30) anschließbar sind.

15. Energieversorgungssystem (10) nach Anspruch 14, aufweisend die Steuerung, welche eingerichtet ist, einen Sollwert für die DC-Netzleistung zu empfangen und den ersten Leistungswandler (12), den zweiten Leistungswandler (12, 14, 16, 18) und/oder den dritten Leistungswandler (34) so zu betreiben, dass die DC-Netzleistung dem Sollwert entspricht.

## Claims

1. A method for operating an energy supply system (10) having at least one energy generation unit, comprising the steps of:
• exchanging power between a first DC unit (22) and an AC bus (20) by means of a first power converter (12), wherein a first DC power of the first DC unit (22) is converted into a first AC power by means of the first power converter (12) and/or vice versa,
• exchanging power between a second DC unit (22, 26, 28) and the AC bus (20) by means of a second power converter (14, 16, 18), wherein a second DC power of the second DC unit (22, 26, 28) is converted into a second AC power by means of the second power converter (14, 16, 18) and/or vice versa,
• combining the first AC power and the second AC power into an AC bus power of the AC bus (20),
• transmitting the AC bus power by means of a transformer (32),
• exchanging power between the AC bus (20) and a DC grid (30) by means of a third power converter (34), wherein the AC bus power transmitted by the transformer (32) is converted by means of the third power converter (34) into a DC grid power and/or vice versa,
• wherein at least the first DC unit (22) is formed as an energy generation unit, more particularly a PV system (22) comprising at least one PV generator (24),
• wherein a frequency and an amplitude of the AC voltage and/or of the AC current on the AC bus (20) are set, **characterised in that** the third power converter (34) sets the frequency on the AC bus (20) as a function of the DC grid power and, for setting the AC voltage and/or the AC current, sets the DC grid power as a function of the AC bus power.

2. The method according to claim 1, wherein the first power converter (12) operates the first DC unit (22) at an operating point of maximum power and converts the first DC power into a first AC current and feeds it into the AC bus (20), wherein the first AC current follows the AC voltage in the AC bus (20).

3. The method according to claim 1 or 2, wherein the second DC power is generated, stored and/or consumed by the second DC unit (22, 26, 28), wherein the second DC power is converted by the second power converter (14, 16, 18) into a second AC current and fed into the AC bus (20), wherein the second AC current follows the AC voltage in the AC bus (20).

4. The method according to any one of the preceding claims, comprising the step of: exchanging power between the AC bus (20) and a further DC unit (26, 28) by means of a further power converter (16, 18), wherein a further DC power of the further DC unit (26, 28) is converted into a further AC power by means of the further power converter (16, 18) and/or vice versa.

5. The method according to any one of the preceding claims wherein the DC grid power is generated, stored and/or consumed by DC grid subscribers (40) connected to the DC grid (30), and/or wherein the further DC power is generated, stored and/or consumed by the further DC unit (26, 28).

6. The method according to any one of the preceding claims, wherein the frequency on the AC bus (20) is set by the third power converter (34) using an f(P) characteristic (P34) as a function of the DC grid power.

7. The method according to any one of the preceding claims, wherein the DC power of the DC units (22, 26, 28) is set by the respective power converter (12, 14, 16, 18) using a P(f) characteristic (P12, P14, P16, P18) as a function of the frequency on the AC bus (20).

8. A device for exchanging electrical power in an energy supply system having at least one energy generation unit, comprising:
an AC bus (20) to which a first power converter (12) and a second power converter (14, 16, 18) are connected, wherein the first power converter (12) is designed to convert a first DC power of a first DC unit (22) into first AC power and/or vice versa, and wherein the second power converter (14, 16, 18) is designed to convert a second DC power of a second DC unit (22, 26, 28) into second AC power and/or vice versa, and
wherein the first and second power converter are each connected on the AC side to an AC bus (20) so that the first and second AC power are transmittable as AC bus power via the AC bus (20),
wherein the device has a transformer (32) arranged between the AC bus (20) and an AC side of a third power converter (34), wherein the transformer (32) is configured to transmit the AC bus power and to provide galvanic isolation,
wherein the third power converter (34) is configured to convert the transmitted AC bus power into DC grid power and/or vice versa, and
wherein, on a DC side of the third power converter (34), a DC grid (30) can be connected in which DC grid users (40) can be operated with the DC grid power, wherein at least the first DC unit (22) is formed as an energy generation unit, more particularly a PV system (22) having at least one PV generator (24),
characterized that the third power converter (34) is designed to set a frequency and an amplitude of the AC voltage and/or the AC current on the AC bus (20), wherein in particular a control unit of the third power converter (34) sets the frequency on the AC bus (20) as a function of the DC grid power and sets the DC grid power as a function of the AC bus power.

9. The device according to claim 8, wherein the first power converter (12) is designed to operate the first DC unit (22) at an operating point of maximum power and to convert the first DC power into a first AC current and to feed it into the AC bus (20), wherein the first AC current follows the AC voltage in the AC bus (20).

10. The device according to claim 8 or 9, wherein a further DC unit (22, 26, 28) can be connected to the AC bus (20) via a further power converter (14, 16, 18), wherein the further power converter (14, 16, 18) is designed to convert a further DC power of the further DC unit (22, 26, 28) into a further AC power and/or vice versa.

11. The device according to any one of claims 8 to 10, wherein the second and/or the further DC unit (22, 26, 28) are configured to generate, store and/or consume the respective DC power.

12. The device according to any one of claims 8 to 11, wherein the transformer (32) is grounded on its side connected to the AC bus (20).

13. The device according to any one of claims 8 to 12, wherein the controller is at least partially implemented by the first, the second and/or the third power converter (12, 14, 16, 18, 34).

14. An energy supply system (10) comprising a device according to any one of claims 8 to 13, having:
- a first DC unit (22) which is formed as a PV system (22) having at least one PV generator (24),
- a second DC unit (22, 26) which is formed as a PV system (22) having at least one PV generator (24) or formed as an energy store (26), and
- a DC grid (30) to which DC grid users (40) can be connected for drawing DC grid power and a superordinate AC supply grid for supplying the DC grid (30).

15. The energy supply system (10) according to claim 14, having the controller, which is configured to receive a setpoint for the DC grid power and to operate the first power converter (12), the second power converter (12, 14, 16, 18) and/or the third power converter (34) such that the DC grid power corresponds to the setpoint.

## Revendications

1. Procédé d'exploitation d'un système d'alimentation en énergie (10) comportant au moins une unité de production d'énergie, comprenant les étapes suivantes :
- échanger de l'énergie entre une première unité CC (22) et un bus CA (20) au moyen d'un premier convertisseur de puissance (12), dans lequel une première puissance CC de la première unité CC (22) est convertie en une première puissance CA au moyen du premier convertisseur de puissance (12) et/ou vice versa,
- échanger de l'énergie entre une deuxième unité CC (22, 26, 28) et le bus CA (20) au moyen d'un deuxième convertisseur de puissance (14, 16, 18), dans lequel une deuxième puissance CC de la deuxième unité CC (22, 26, 28) est convertie en une deuxième puissance CA au moyen du deuxième convertisseur de puissance (14, 16, 18) et/ou vice versa,
- combiner la première puissance CA et la seconde puissance CA en une puissance de bus CA du bus CA (20),
- transmettre la puissance du bus CA au moyen d'un transformateur (32),
- échanger de l'énergie entre le bus CA (20) et un réseau CC (30) au moyen d'un troisième convertisseur de puissance (34), l'énergie du bus CA transmise par le transformateur (32) étant convertie au moyen du troisième convertisseur de puissance (34) en une énergie de réseau CC et/ou vice versa,
- dans lequel au moins la première unité CC (22) est constituée d'une unité de production d'énergie, plus particulièrement d'un système PV (22) comprenant au moins un générateur PV (24),
- dans lequel une fréquence et une amplitude de la tension CA et/ou du courant CA sur le bus CA (20) sont réglées, **caractérisé par le fait que** le troisième convertisseur de puissance (34) règle la fréquence sur le bus CA (20) en fonction de la puissance du réseau CC et, pour régler la tension CA et/ou le courant CA, règle la puissance du réseau CC en fonction de la puissance du bus CA.

2. Procédé selon la revendication 1, dans laquelle le premier convertisseur de puissance (12) fait fonctionner la première unité CC (22) à un point de fonctionnement de puissance maximale et convertit la première puissance CC en un premier courant CA et l'alimente dans le bus CA (20), dans lequel le premier courant CA suit la tension CA dans le bus CA (20).

3. Procédé selon la revendication 1 ou 2, dans laquelle la seconde puissance CC est générée, stockée et/ou consommée par la seconde unité CC (22, 26, 28), dans laquelle la seconde puissance CC est convertie par le second convertisseur de puissance (14, 16, 18) en un second courant CA et alimentée dans le bus CA (20), dans lequel le second courant CA suit la tension CA dans le bus CA (20).

4. Procédé selon l'une quelconque des revendications précédentes, comprenant l'étape consistant à :
échanger de l'énergie entre le bus CA (20) et une autre unité CC (26, 28) au moyen d'un autre convertisseur de puissance (16, 18), dans lequel une autre puissance CC de l'autre unité CC (26, 28) est convertie en une autre puissance CA au moyen de l'autre convertisseur de puissance (16, 18) et/ou vice versa.

5. Procédé selon l'une quelconque des revendications précédentes, dans laquelle la puissance de réseau CC est générée, stockée et/ou consommée par des abonnés au réseau CC (40) connectés au réseau CC (30), et/ou dans laquelle la puissance CC supplémentaire est générée, stockée et/ou consommée par l'unité CC supplémentaire (26, 28).

6. Procédé selon l'une quelconque des revendications précédentes, dans lequel la fréquence sur le bus CA (20) est réglée par le troisième convertisseur de puissance (34) à l'aide d'une caractéristique f(P) (P34) en fonction de la puissance du réseau CC.

7. Procédé selon l'une quelconque des revendications précédentes, dans lequel la puissance CC des unités CC (22, 26, 28) est réglée par le convertisseur de puissance respectif (12, 14, 16, 18) à l'aide d'une caractéristique P(f) (P12, P14, P16, P18) en fonction de la fréquence sur le bus CA (20).

8. Dispositif d'échange d'énergie électrique dans un système d'alimentation en énergie comportant au moins une unité de production d'énergie, comprenant :
un bus CA (20) auquel sont connectés un premier convertisseur de puissance (12) et un second convertisseur de puissance (14, 16, 18), dans lequel le premier convertisseur de puissance (12) est conçu pour convertir une première puissance CC d'une première unité CC (22) en première puissance CA et/ou vice versa, et dans lequel le second convertisseur de puissance (14, 16, 18) est conçu pour convertir une seconde puissance CC d'une seconde unité CC (22, 26, 28) en seconde puissance CA et/ou vice versa, et
dans lequel le premier et le second convertisseur de puissance sont chacun connectés du côté CA à un bus CA (20) de sorte que la première et la seconde puissance CA sont transmissibles en tant que puissance de bus CA via le bus CA (20),
dans lequel le dispositif comporte un transformateur (32) placé entre le bus CA (20) et un côté CA d'un troisième convertisseur de puissance (34), dans lequel le transformateur (32) est configuré pour transmettre la puissance du bus CA et pour fournir une isolation galvanique,
dans lequel le troisième convertisseur de puissance (34) est configuré pour convertir la puissance de bus CA transmise en puissance de réseau CC et/ou vice versa, et
dans lequel, du côté CC du troisième convertisseur de puissance (34), un réseau CC (30) peut être connecté dans lequel les utilisateurs du réseau CC (40) peuvent être exploités avec l'énergie du réseau CC,
dans lequel au moins la première unité CC (22) est constituée d'une unité de production d'énergie, plus particulièrement d'un système PV (22) comportant au moins un générateur PV (24),
**caractérisé par le fait que** le troisième convertisseur de puissance (34) est conçu pour régler une fréquence et une amplitude de la tension CA et/ou du courant CA sur le bus CA (20), une unité de commande du troisième convertisseur de puissance (34) réglant notamment la fréquence sur le bus CA (20) en fonction de la puissance du réseau CC et réglant la puissance du réseau CC en fonction de la puissance du bus CA.

9. Dispositif selon la revendication 8, dans lequel le premier convertisseur de puissance (12) est conçu pour faire fonctionner la première unité CC (22) à un point de fonctionnement de puissance maximale et pour convertir la première puissance CC en un premier courant CA et l'introduire dans le bus CA (20), dans lequel le premier courant CA suit la tension CA dans le bus CA (20).

10. Dispositif selon la revendication 8 ou 9, dans lequel une autre unité CC (22, 26, 28) peut être connectée au bus CA (20) via un autre convertisseur de puissance (14, 16, 18), dans lequel l'autre convertisseur de puissance (14, 16, 18) est conçu pour convertir une autre puissance CC de l'autre unité CC (22, 26, 28) en une autre puissance CA et/ou vice-versa.

11. Dispositif selon l'une des revendications 8 à 10, dans lequel la deuxième et/ou l'autre unité CC (22, 26, 28) sont configurées pour générer, stocker et/ou consommer la puissance CC respective.

12. Dispositif selon l'une des revendications 8 à 11, dans lequel le transformateur (32) est mis à la terre sur son côté connecté au bus CA (20).

13. Dispositif selon l'une des revendications 8 à 12, dans lequel le contrôleur est au moins partiellement mis en œuvre par le premier, le deuxième et/ou le troisième convertisseur de puissance (12, 14, 16, 18, 34).

14. Système d'alimentation en énergie (10) comprenant un dispositif selon l'une quelconque des revendications 8 à 13, ayant :
- une première unité CC (22) formée d'un système PV (22) comportant au moins un générateur PV (24),
- une deuxième unité CC (22, 26) qui est formée comme un système PV (22) ayant au moins un générateur PV (24) ou formée comme un stockeur d'énergie (26), et
- un réseau CC (30) auquel les utilisateurs du réseau CC (40) peuvent être connectés pour tirer de l'énergie du réseau CC et un réseau d'alimentation CA subordonné pour alimenter le réseau CC (30).

15. Système d'alimentation en énergie (10) selon la revendication 14, comportant un contrôleur configuré pour recevoir un point de consigne pour la puissance du réseau CC et pour faire fonctionner le premier convertisseur de puissance (12), le deuxième convertisseur de puissance (12, 14, 16, 18) et/ou le troisième convertisseur de puissance (34) de manière à ce que la puissance du réseau CC corresponde au point de consigne.
